# EUROPÄISCHE PATENTANMELDUNG

(11) **EP 4 343 025 A1**
(43) Veröffentlichungstag der Anmeldung: **27.03.2024**
(21) Anmeldenummer: 22196778.9
(22) Anmeldetag: 21.09.2022
(51) Int. Cl.: C25B 1/02, C25B 9/05, C25B 9/30, C25B 11/034, B01D 53/32, F04B 27/053, F04B 35/01, C25B 9/23

(54) **VORRICHTUNG UND VERFAHREN ZUR KOMPRIMIERUNG UND REINIGUNG VON WASSERSTOFF**

(71) Anmelder: Robert Bosch GmbH, 70442 Stuttgart (DE)
(72) Erfinder: Gorgone, Giovanni, 75100 Matera (IT)

(57) **Zusammenfassung**

Die Erfindung betrifft eine Vorrichtung zur Komprimierung und Reinigung von Wasserstoff, aufweisend einen elektrochemischen Wasserstoffkompressor (1) mit einer Protonenaustauschmembran (2), die eine Anode (3) von einer Kathode (4) trennt, wobei der elektrochemische Wasserstoffkompressor (1) in einen mechanischen Kompressor (5) mit einer drehbar gelagerten Welle (6) integriert ist.

Die Erfindung betrifft ferner ein Verfahren zur Komprimierung und Reinigung von Wasserstoff unter Verwendung einer erfindungsgemäßen Vorrichtung.

## Beschreibung

Die Erfindung betrifft eine Vorrichtung und ein Verfahren zur Komprimierung und Reinigung von Wasserstoff. Die Komprimierung und Reinigung erfolgt dabei unter Verwendung eines elektrochemischen Wasserstoffkompressors (engl.: "Electrochemical Hydrogen Compressor", EHC).

Die Vorrichtung und das Verfahren dienen der Erzeugung hochkomprimierten, reinen Wasserstoffs, insbesondere für mobile Anwendungen. Darüber hinaus kann die Erfindung Einsatz in stationären Einrichtungen zur Versorgung mit komprimiertem, reinen Wasserstoff Einsatz finden.

### Stand der Technik

Für Anwendungen, die hochkomprimierten Wasserstoff benötigen, werden in der Regel mechanische Kompressoren bzw. Pumpen eingesetzt, beispielsweise Kolben- und/oder Membranpumpen. Mechanische Kompressoren weisen sich im Betrieb bewegende Teile auf, die Vibrationen und Geräusche verursachen sowie dem Verschleiß und der Abnutzung unterliegen. Als nachteilig erweist sich ferner, dass mechanische Kompressoren in der Regel geschmiert werden müssen, so dass die Gefahr einer Verunreinigung des Wasserstoffs mit dem Schmiermittel besteht.

Bei der Komprimierung von Wasserstoff mit Hilfe eines elektrochemischen Wasserstoffkompressors treten diese Nachteile nicht auf, da ein EHC keine sich bewegenden Teile aufweist. Die Komprimierung wird mit Hilfe einer Membran-Elektroden-Anordnung bewirkt, die eine Protonenaustauschmembran (PEM) zur Trennung einer Anode von einer Kathode umfasst. Dem EHC wird ein wasserstoffhaltiges Gasgemisch zugeführt. In der Anode wird der Wasserstoff in Protonen und Elektronen aufgespalten. Die Protonen werden elektrochemisch über die Protonenaustauschmembranen zur Kathode getrieben, wo sie sich mit umgeleiteten Elektronen erneut zu Wasserstoff verbinden. Dabei entsteht von den anderen Gasen des Gasgemischs getrennter, das heißt reiner, und zudem komprimierter Wasserstoff.

Mit Hilfe der EHC-Technologie kann Wasserstoff bis auf 1000 bar komprimiert werden. Mit dem Druck steigt allerdings auch der Stromverbrauch, so dass lediglich eine Komprimierung von Wasserstoff auf maximal 150 bar als wirtschaftlich vertretbar angesehen wird. Um höhere Drücke zu erzielen, müssen mehrstufige Systeme eingesetzt werden, so dass die Komplexität und die Dimensionen der Anlage steigen. Zudem ist der Zeitaufwand größer.

Eine weitere Herausforderung im Betrieb eines elektrochemischen Wasserstoffkompressors stellt das Wassermanagement dar. Da im Betrieb eines EHCs kein Wasser anfällt, muss die Protonenaustauschmembran aktiv befeuchtet werden, um eine ausreichende Protonenleitfähigkeit zu gewährleisten.

Die vorliegende Erfindung ist mit der Aufgabe befasst, die Erzeugung hochkomprimierten, reinen Wasserstoffs mit Hilfe der EHC-Technologie einfacher und energieeffizienter zu gestalten.

Zur Lösung der Aufgabe werden die Vorrichtung mit den Merkmalen des Anspruchs 1 sowie das Verfahren mit den Merkmalen des Anspruchs 9 vorgeschlagen. Vorteilhafte Ausführungsformen sind den jeweiligen Unteransprüchen zu entnehmen.

### Offenbarung der Erfindung

Die zur Komprimierung und Reinigung von Wasserstoff vorgeschlagene Vorrichtung weist einen elektrochemischen Wasserstoffkompressor mit einer Protonenaustauschmembran auf, die eine Anode von einer Kathode trennt. Der elektrochemische Wasserstoffkompressor ist dabei in einen mechanischen Kompressor mit einer drehbar gelagerten Welle integriert.

Die Integration des elektrochemischen Wasserstoffkompressors in einen mechanischen Kompressor ermöglicht bei Bedarf ein Nachverdichten des mit Hilfe des elektrochemischen Wasserstoffkompressors komprimierten und gereinigten Wasserstoffs. Das heißt, dass die Komprimierung mehrstufig erfolgen kann, wobei die weitere Stufe jedoch durch einen mechanischen Kompressor ausgebildet wird. Dadurch ist es möglich, hochkomprimierten, reinen Wasserstoff bei vergleichsweise geringem Stromverbrauch zu erzeugen, da das Nachverdichten in der weiteren Stufe nicht mit Hilfe des elektrochemischen Wasserstoffkompressors, sondern mit Hilfe eines mechanischen Kompressors realisiert wird. Der mechanische Kompressor kann einen sehr einfachen Aufbau aufweisen, so dass sich die Komplexität der Vorrichtung verringert. Zudem wird durch Integration des elektrochemischen Wasserstoffkompressors in den mechanischen Kompressor eine kompakt bauende Vorrichtung geschaffen.

Gemäß einer bevorzugten Ausführungsform der Erfindung weist die Welle des mechanischen Kompressors mindestens einen Nocken auf, an der ein Kolben einer Kolben-Zylinder-Einheit radial abgestützt ist. Der Kolben kann dann über die Welle in einer Hubbewegung angetrieben werden, so dass der Kolben zum Nachverdichten des mit Hilfe des elektrochemischen Wasserstoffkompressors komprimierten und gereinigten Wasserstoffs einsetzbar ist. Der komprimierte und gereinigte bzw. reine Wasserstoff wird hierzu der Kolben-Zylinder-Einheit zugeführt bzw. über die Kolben-Zylinder-Einheit abgeführt.

Bevorzugt ist die Welle des mechanischen Kompressors zumindest abschnittsweise als Hohlwelle ausgebildet, über die der Anode des elektrochemischen Wasserstoffkompressors Wasserstoff und Wasser zuführbar ist. Durch diese Maßnahme kann der Leitungsaufwand reduziert werden, da der als Hohlwelle ausgebildete Abschnitt der Welle sowohl eine Gasleitung als auch eine Wasserleitung zu ersetzen vermag. Die Zuführung von Wasser dient dabei der Befeuchtung der Protonenaustauschmembran des elektrischen Wasserstoffkompressors.

Ferner bevorzugt ist die Anode des elektrochemischen Wasserstoffkompressors in die Welle integriert. Besonders bevorzugt bildet die Welle die Anode aus.

In Weiterbildung der Erfindung wird daher vorgeschlagen, dass die Welle einen Abschnitt mit mantelseitigen Öffnungen aufweist, der von der Protonenaustauschmembran des elektrochemischen Wasserstoffkompressors umgeben ist. Der die mantelseitigen Öffnungen aufweisende Wellenabschnitt ersetzt in diesem Fall eine anodenseitige Gasdiffusionslage. Die mantelseitigen Öffnungen sind hierzu bevorzugt als Mikro-Öffnungen ausgebildet. Derartige Mikro-Öffnungen können beispielsweise mit Hilfe der Femtolaser-Technik hergestellt werden.

Die Protonenaustauschmembran ist vorzugsweise aus Nafion 117 hergestellt, das aus Polytetrafluorethylen (PTFE) und grenzflächenaktiven Stoffen zur Verbesserung der Protonenleitfähigkeit durch die Membran besteht. Die Protonenleitfähigkeit der Membran kann durch aktives Befeuchten weiter gesteigert. Der Anode wird daher bevorzugt nicht nur Wasserstoff oder ein wasserstoffhaltiges Gasgemisch, sondern auch Wasser zugeführt.

Die Protonenaustauschmembran ist bevorzugt in einem volutenartigen Gehäuseteil des mechanischen Kompressors aufgenommen, durch das die Welle hindurchgeführt ist. Das Gehäuseteil ist feststehend, das heißt, dass es nicht mit der Welle rotiert. Bei einer Rotation der Welle rotiert demnach die in die Welle integrierte Anode gegenüber der Kathode des elektrochemischen Wasserstoffkompressors. Denn die Kathode ist auf der der Anode abgewandten Seite der Protonenaustauschmembran abgeordnet und demzufolge zusammen mit der Protonenaustauschmembran in dem nicht rotierenden, volutenartigen Gehäuseteil aufgenommen. Die Relativbewegung der Anode gegenüber der Kathode fördert die Ausbildung eines Wasserfilms auf der Protonenaustauschmembran, so dass diese optimal befeuchtet ist.

Bevorzugt ist in dem volutenartigen Gehäuseteil eine Kammer ausgebildet, die von der Protonenaustauschmembran durch eine Öffnungen aufweisende Wand und/oder eine kathodenseitige Gasdiffusionslage getrennt ist. Analog zur Ausbildung der Anode kann die die Öffnungen aufweisende Wand auch die kathodenseitige Gasdiffusionslage ersetzen. Die Öffnungen sind vorzugsweise als Mikro-Öffnungen ausgeführt. Zur Realisierung der Öffnungen kann wiederum die Femtolaser-Technik eingesetzt werden.

In der Kammer des volutenartigen Gehäuseteils ist vorzugsweise ein Kühlelement, beispielsweise ein Peltier-Element, aufgenommen. Mit Hilfe des Kühlelements kann der in die Kammer gelangende komprimierte Wasserstoff so weit abgekühlt werden, dass in ihm enthaltener Wasserdampf kondensiert. Auf diese Weise kann der Reinheitsgrad des Wasserstoffs erhöht werden, so dass schließlich 100% Wasserstoff in der Kammer vorhanden ist. Das Kondensat kann über einen bodenseitigen Auslass einfach aus der Kammer abgeführt werden.

Bevorzugt ist die in dem volutenartigen Gehäuseteil ausgebildete Kammer mit einer Druckkammer der Kolben-Zylinder-Einheit des mechanischen Kompressors verbunden. Der komprimierte und gereinigte Wasserstoff wird dann über die Kammer der Kolben-Zylinder-Einheit zum Nachverdichten zugeführt. Sofern ein Nachverdichten nicht erforderlich ist, kann der komprimierte und gereinigte bzw. reine Wasserstoff auch über die Kolben-Zylinder-Einheit einem Hochdruckspeicher zugeführt werden. Der Strömungspfad bleibt der gleiche, unabhängig davon, ob der mechanische Kompressor in Betrieb genommen wird oder nicht. Auf diese Weise kann der mechanische Kompressor auch allein zum Fördern des komprimierten, reinen Wasserstoffs in den Hochdruckspeicher genutzt werden.

Als weiterbildende Maßnahme wird vorgeschlagen, dass der mechanische Kompressor eine weitere Kolben-Zylinder-Einheit zur Komprimierung eines weiteren Gases aufweist. Abhängig von dem Gasgemisch, das der Anode des elektrochemischen Wasserstoffkompressors zugeführt wird, kann bei der Erzeugung von hochkomprimiertem, reinen Wasserstoff ein weiteres Gas als Nebenprodukt anfallen. Mit Hilfe der weiteren Kolben-Zylinder-Einheit kann dann das weitere Gas ebenfalls komprimiert und einer Nutzung zugeführt werden. Die weitere Kolben-Zylinder-Einheit lässt sich in einfacher und platzsparender Weise in die Vorrichtung zur Komprimierung und Reinigung von Wasserstoff integrieren.

Wird der Anode beispielsweise ein wasserstoff- und methanhaltiges Gasgemisch zugeführt, fällt Methan (CH4) als Nebenprodukt an. Mit Hilfe der weiteren Kolben-Zylinder-Einheit kann das Methan komprimiert und ggf. einem weiteren Hochdruckspeicher zugeführt werden, so dass es für weitere Nutzungen zur Verfügung steht.

Darüber hinaus wird ein Verfahren zur Komprimierung und Reinigung von Wasserstoff unter Verwendung einer erfindungsgemäßen Vorrichtung vorgeschlagen. Bei dem Verfahren wird mit Hilfe des elektrochemischen Wasserstoffkompressors komprimierter und gereinigter Wasserstoff mit Hilfe des mechanischen Kompressors nachverdichtet. Das Verfahren sieht demnach eine mehrstufige Komprimierung von Wasserstoff vor, wobei die erste Stufe durch den elektrochemischen Wasserstoffkompressor und die weitere Stufe durch den mechanischen Kompressor realisiert wird.

Bei der Durchführung des Verfahrens kann der mechanische Kompressor intermittierend und/oder mit variierender Drehzahl betrieben werden. Der intermittierende Betrieb des mechanischen Kompressors stellt sicher, dass der komprimierte und gereinigte Wasserstoff nur bei Bedarf nachverdichtet wird. Das heißt, dass über den intermittierenden Betrieb des mechanischen Kompressors zwischen mindestens zwei unterschiedlichen Druckniveaus gewechselt werden kann. Wird - alternativ oder ergänzend - der mechanische Kompressor mit variierender Drehzahl betrieben, kann das Druckniveau dynamisch angepasst werden.

Da durch aktives Befeuchten der Protonenaustauschmembran des elektrochemischen Wasserstoffkompressors die Protonenleitfähigkeit der Membran verbessert werden kann, wird vorzugsweise der Anode des elektrochemischen Wasserstoffkompressors zusammen mit Wasserstoff oder einem wasserstoffhaltigen Gasgemisch Wasser zum Befeuchten der Protonenaustauschmembran zugeführt. Das Wasser wird hierzu in den als Hohlwelle ausgebildeten Abschnitt der Welle des mechanischen Kompressors eingeleitet, vorteilhafterweise über einen separaten Anschluss, so dass dieser über eine Wasserleitung mit einem Wasserreservoir verbunden werden kann. Der Wasserstoff bzw. das wasserstoffhaltige Gas kann dann über eine Gasleitung und einen Gasanschluss dem als Hohlwelle ausgebildeten Abschnitt der Welle zugeführt werden.

Da bei dem Verfahren die zuvor beschriebene erfindungsgemäße Vorrichtung verwendet wird, ist die Anode in die Welle des mechanischen Kompressors integriert bzw. die Welle bildet die Anode aus. Das heißt, dass im Betrieb des mechanischen Kompressors die Anode gegenüber der Kathode des elektrochemischen Wasserstoffkompressors rotiert wird. Muss der komprimierte und gereinigte Wasserstoff nicht nachverdichtet werden, kommt es nicht zu einer Rotationsbewegung der Anode gegenüber der Kathode. Der mechanische Kompressor kann aber nicht nur zum Nachverdichten eingesetzt werden, sondern bei Bedarf auch zum Fördern von komprimiertem und gereinigtem Wasserstoff in einen Hochdruckspeicher. Der komprimierte und gereinigte Wasserstoff wird hierzu über die Kolben-Zylinder-Einheit des mechanischen Kompressors aus der Vorrichtung abgeführt.

Bei aktiver Befeuchtung der Protonenaustauschmembran des elektrochemischen Wasserstoffkompressors durch Einleiten von Wasser in den als Hohlwelle ausgebildeten Abschnitt der Welle fördert die Rotationsbewegung der Anode gegenüber der Kathode die Ausbildung eines Wasserfilms auf der Protonenaustauschmembran, so dass die Befeuchtung der Membran weiter verbessert wird.

Die aktive Befeuchtung der Protonenaustauschmembran kann dazu führen, dass Wasser oder Wasserdampf von der Anodenseite auf die Kathodenseite gelangt. Flüssigwasser sammelt sich schwerkraftgetrieben im Bodenbereich und kann somit einfach von dem Gas getrennt werden. Um in der Kathode vorhandenen Wasserdampf vom komprimierten Wasserstoff zu trennen, wird vorgeschlagen, dass kathodenseitig der komprimierte Wasserstoff aktiv abgekühlt wird, beispielsweise mit Hilfe eines Peltier-Elements, so dass in die Kathode gelangender Wasserdampf kondensiert und über einen bodenseitigen Auslass abführbar ist. Auf diese Weise kann der Reinheitsgrad des komprimierten Wasserstoffs auf 100 % Wasserstoff angehoben werden.

Des Weiteren wird vorgeschlagen, dass vor dem Nachverdichten der Reinheitsgrad des komprimierten und gereinigten Wasserstoffs mit Hilfe eines Wasserstoffsensors ermittelt wird. Sofern der Reinheitsgrad unzureichend ist, kann durch weiteres Abkühlen restlicher Wasserstoff kondensiert und vom Gas getrennt werden. Anschließend kann der komprimierte und gereinigte Wasserstoff in der Kolben-Zylinder-Einheit des mechanischen Kompressors nachverdichtet werden.

Weiterhin vorzugsweise wird mit Hilfe des mechanischen Kompressors der komprimierte und gereinigte Wasserstoff einem Hochdruckspeicher zugeführt. Der mechanische Kompressor kann somit zum Nachverdichten und/oder Fördern von komprimiertem und gereinigtem bzw. reinem Wasserstoff eingesetzt werden.

Eine bevorzugte Ausführungsform der erfindungsgemäßen Vorrichtung sowie das erfindungsgemäße Verfahren werden nachfolgend anhand der beigefügten Zeichnungen näher erläutert. Diese zeigen:
Figur 1 eine Seitenansicht der erfindungsgemäßen Vorrichtung,
Figur 2 a) und b) jeweils eine perspektivische Darstellung der Vorrichtung der Figur 1 aus unterschiedlichen Richtungen betrachtet,
Figur 3 a) einen Längsschnitt durch die Vorrichtung der Figur 1 und b) einen vergrößerten Ausschnitt der Figur 3a) im Bereich der Protonenaustauschmembran des elektrochemischen Wasserstoffkompressors,
Figur 4 eine schematische Darstellung der Vorrichtung der Figur 1,
Figur 5 eine schematische Darstellung der Vorrichtung der Figur 1 mit einer zusätzlichen Gasleitung,
Figur 6 ein Diagramm zur graphischen Darstellung des Druckverlaufs bei intermittierendem Betrieb des mechanischen Kompressors und
Figur 7 ein Diagramm zur Darstellung des Druckverlaufs bei dynamischem Betrieb des mechanischen Kompressors.

### Ausführliche Beschreibung der Zeichnungen

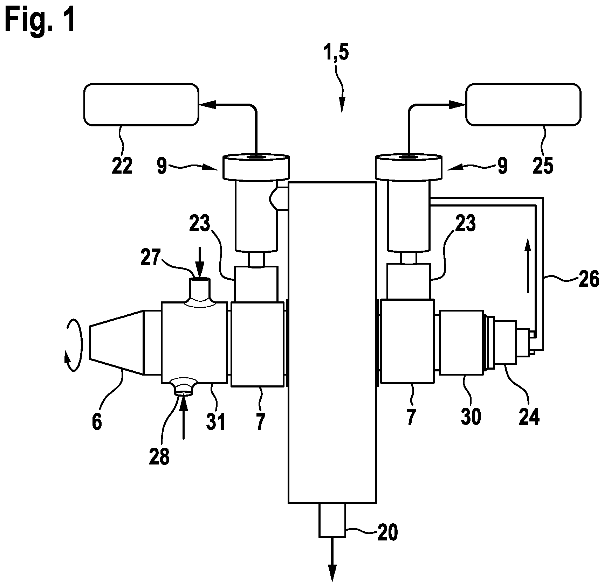

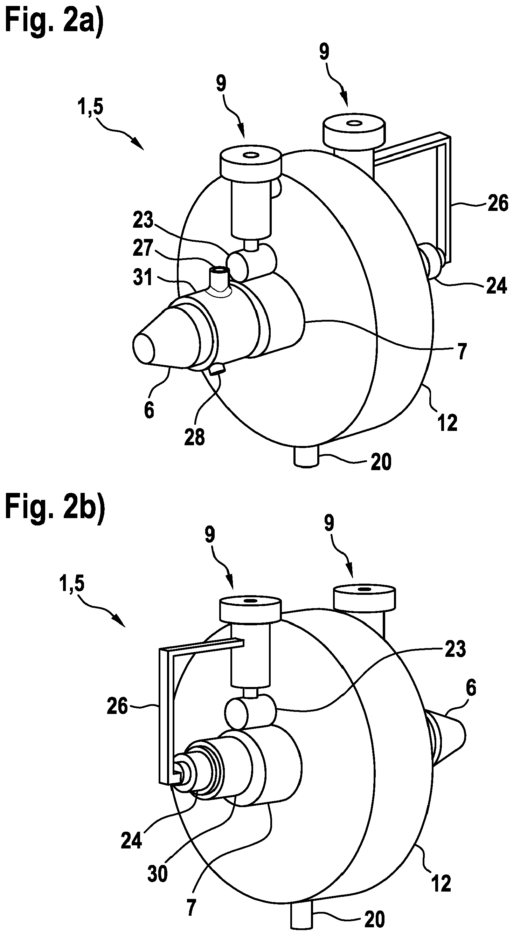

Die in der Figuren 1, 2a), 2b), 3a) und 3b) dargestellte Vorrichtung dient der Erzeugung hochkomprimierten und gereinigten Wasserstoffs. Die Vorrichtung weist hierzu einen elektrochemischen Wasserstoffkompressor 1 auf, der in einen mechanischen Kompressor 5 mit einer rotierenden Welle 6 integriert ist. Mit Hilfe des mechanischen Kompressors 5 kann mit Hilfe des elektrochemischen Wasserstoffkompressors 1 komprimierter und gereinigter Wasserstoff nachverdichtet werden. Das Nachverdichten ermöglicht die Erzeugung hochkomprimierten Wasserstoffs. Im Unterschied zu einem mehrstufig ausgelegten elektrochemischen Wasserstoffkompressor kann die Erzeugung von hochkomprimiertem Wasserstoff bei deutlich geringerem Stromverbrauch realisiert werden.

Der mechanische Kompressor 5 weist zum Nachverdichten des Wasserstoffs eine Kolben-Zylinder-Einheit 9 mit einem Kolben 8 auf, der an einem Nocken 7 der Welle 6 abgestützt ist, so dass der Kolben 8 über den Nocken 7 in einer Hubbewegung antreibbar ist. Die dargestellte Vorrichtung weist zwei solcher Kolben-Zylinder-Einheiten 9 auf, wobei die zweite Kolben-Zylinder-Einheit 9 dem Verdichten von Methan dient. Methan fällt an, wenn dem elektrochemischen Wasserstoffkompressor 1 ein Gasgemisch aus Wasserstoff und Methan zugeführt wird. Die zweite Kolben-Zylinder-Einheit 9 kann aber auch zum Verdichten und/oder Fördern eines anderen Gases eingesetzt werden.

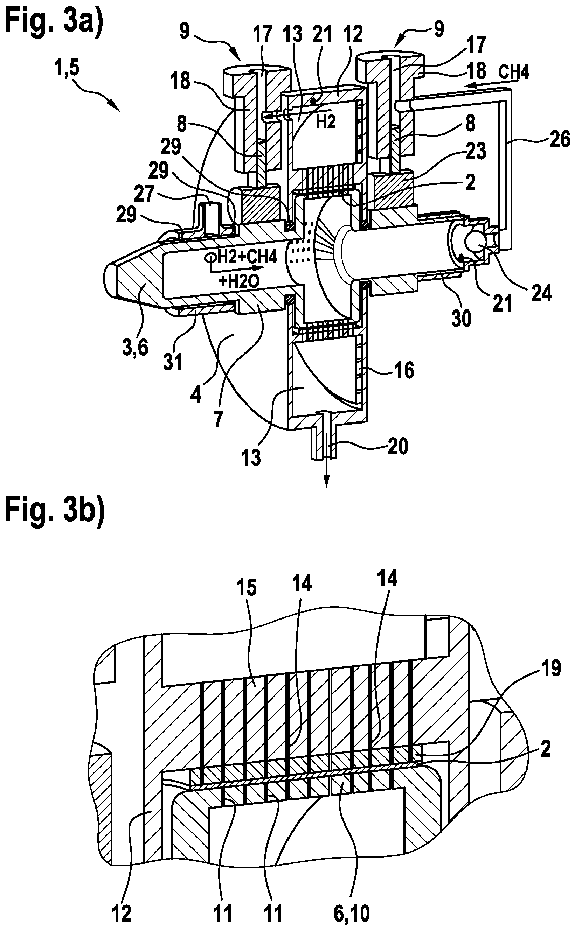

Die Zuführung von Wasserstoff und Methan erfolgt über einen Einlass 28, der an einer die Welle 6 umgebenden Hülse 31 vorgesehen. Die Hülse 31 bildet einen weiteren Einlass 27 für die Zuführung von Wasser aus. Wie insbesondere der Figur 3a) zu entnehmen ist, ist die Welle 6 abschnittsweise als Hohlwelle ausgeführt, so dass über den Einlass 28 das Gasgemisch und über den Einlass 27 Wasser in den als Hohlwelle ausgebildeten Abschnitt der Welle 6 gelangt. In einem zentralen Abschnitt 10 mit vergrößertem Durchmesser weist die Welle 6 mantelseitige Öffnungen 11 auf, über die das Gasgemisch und das Wasser an eine Protonenaustauschmembran 2 gelangt, die den Abschnitt 10 der Welle 6 umgibt. Die Protonenaustauschmembran 2 trennt eine Anode 3 von einer Kathode 4 des elektrochemischen Wasserstoffkompressors 1. Die Anode 3 ist demnach in die Welle 6 integriert bzw. wird durch die Welle 6 ausgebildet. Die mantelseitigen Öffnungen 11 im Abschnitt 10 der Welle 6 ersetzen dabei eine anodenseitige Gasdiffusionslage. Kathodenseitig ist eine Gasdiffusionslage 19 vorgesehen, die zusammen mit der Protonenaustauschmembran 2 in ein volutenartiges Gehäuseteil 12 integriert ist (siehe Figur 3b)), durch das die Welle 6 hindurchgeführt ist (siehe Figur 3a)). Das heißt, dass im Betrieb des mechanischen Kompressors 5 die Welle 6 bzw. die Anode 3 gegenüber dem Gehäuseteil 12 sowie gegenüber der Kathode 4 rotiert.

Im Gehäuseteil 12 ist eine ringförmige Kammer 13 ausgebildet, die über Öffnungen 14 in einer Wand 15 mit der Kathode 4 verbunden ist. Der mit Hilfe des elektrochemischen Wasserstoffkompressors 1 komprimierte Wasserstoff gelangt somit über die Öffnungen 14 in die Kammer 13. Da der komprimierte Wasserstoff Wasserdampf enthalten kann, wird er in der Kammer 13 mit Hilfe eines Peltier-Elements 16 abgekühlt, so dass der Wasserdampf kondensiert. Schwerkraftgetrieben sammelt sich das Kondensat am Boden der Kammer 13. Über einen dort angeordneten Auslass 20 kann das Kondensat abgeführt werden. Zur Überprüfung der Reinheit des komprimierten Wasserstoffs ist in die Kammer 13 ein Wasserstoffsensor 21 integriert.

Über die Kammer 13 gelangt der komprimierte und gereinigte Wasserstoff in eine Druckkammer 17 eines Zylinders 18 der Kolben-Zylinder-Einheit 9 zum Nachverdichten von Wasserstoff, so dass der zunächst mit Hilfe des elektrochemischen Wasserstoffkompressors 1 komprimierte Wasserstoff bei Bedarf mit Hilfe des mechanischen Kompressors 5 nachverdichtet werden kann. Sofern ein Nachverdichten nicht erforderlich ist, kann der komprimierte und gereinigte Wasserstoff über die Druckkammer 17 auch direkt einem Hochdruckspeicher 22 zugeführt werden (siehe Figur 1). Die zweite Kolben-Zylinder-Einheit 9 ist an einen Hochdruckspeicher 25 für komprimiertes Methan angeschlossen. Beide Kolben-Zylinder-Einheiten 9 weisen vorliegend den gleichen Aufbau auf, so dass ihre Komponenten mit denselben Bezugszeichen versehen sind. Der Kolben 8 ist jeweils über eine Rolle 23 an einem Nocken 7 der Welle 6 abgestützt, so dass die Rotation der Welle 6 den Kolben 8 in einer Hubbewegung antreibt. Das Methan wird über ein Ventil 24 in die Druckkammer 17 des Zylinders 18 der zweiten Kolben-Zylinder-Einheit 9 eingeleitet. Das Ventil 24 ist endseitig in die Welle 6 integriert, und zwar an dem den Einlässen 27 und 28 gegenüberliegenden Ende der Welle 6. An das Ende schließt eine Gasleitung 26 an, über die das Methan dann in die Druckkammer 17 des Zylinders 18 eingeleitet wird (siehe Figur 3a)). Über die Druckkammer 17 gelangt dann das Gas in den weiteren Hochdruckspeicher 25 (siehe Figur 1).

Zur Abstützung der Welle 6, insbesondere bei unterschiedlichem Druckniveau in den beiden Hochdruckspeichern 22, 25, ist ein Lager 30 vorgesehen, über das die Welle 6 drehbar gelagert ist (siehe Figuren 1, 2b) und 3a)). Ein weiteres Drehlager kann über die Hülse 31 ausgebildet werden, die andernends die Welle 6 umgibt und die beiden Einlässe 27, 28 aufweist. Zur Abdichtung sind zwischen der Hülse 31 und der Welle 6 Dichtringe 29 vorgesehen, die im Betrieb des mechanischen Kompressors 5 dynamisch belastet werden. Ein weiterer Dichtring 29 ist zwischen dem volutenartigen Gehäuseteil 12 und der Welle 6 angeordnet.

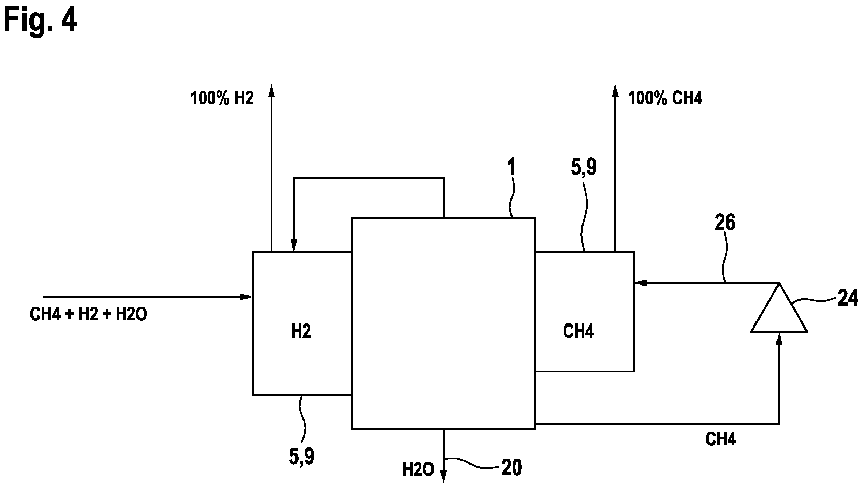

Der Betrieb der erfindungsgemäßen Vorrichtung zur Komprimierung und Reinigung von Wasserstoff wird nachfolgend anhand der Figuren 4 bis 7 erläutert.

Wie der Figur 4 zu entnehmen ist, wird dem elektrochemischen Wasserstoffkompressor 1 der Vorrichtung ein Gasgemisch aus Methan (CH₄) und Wasserstoff (H₂) zusammen mit Wasser (H₂O) zugeführt. Die Zuführung erfolgt über den mechanischen Kompressor 5, und zwar über die Welle 6 des mechanischen Kompressors 5. Der elektrochemische Wasserstoffkompressor 1 erzeugt komprimierten Wasserstoff (H₂), der anschließend mit Hilfe des mechanischen Kompressors 5 nachverdichtet wird. Zuvor wird im komprimierten Wasserstoff enthaltener Wasserdampf kondensiert und über den Auslass 20 abgeführt, so dass in den mechanischen Kompressor 5 reiner Wasserstoff gelangt (100 % H₂). Das ferner zugeführte Methan (CH₄) wird über das Ventil 24 und die Gasleitung 26 dem mechanischen Kompressor 5 zum Verdichten zugeführt, so dass als Nebenprodukt verdichtetes Methan entsteht (100 % CH₄).

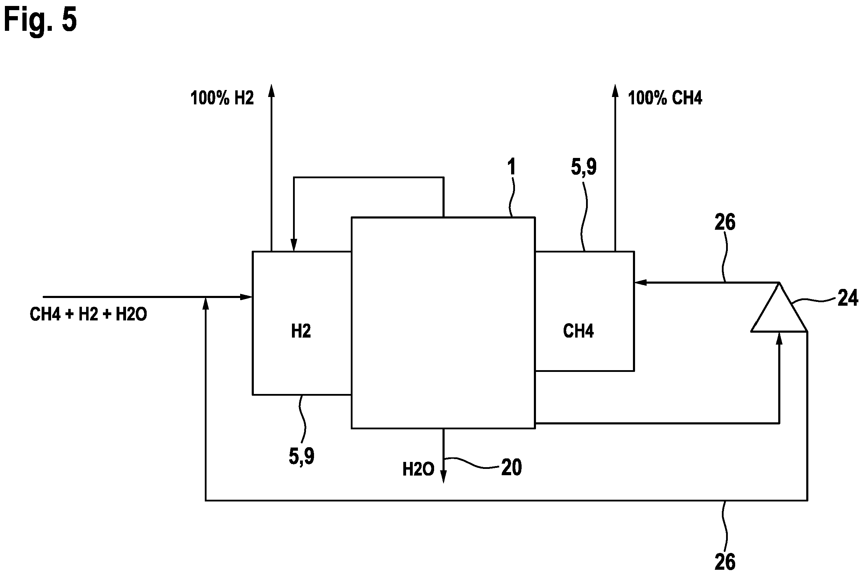

Wie beispielhaft in der Figur 5 dargestellt, kann das Methan (CH₄) über das Ventil 24 und eine weitere Gasleitung 26 auch wieder zurück auf die Einlassseite der Vorrichtung geführt werden. Das Methan steht somit erneut für den zuvor beschriebenen Prozess zur Verfügung.

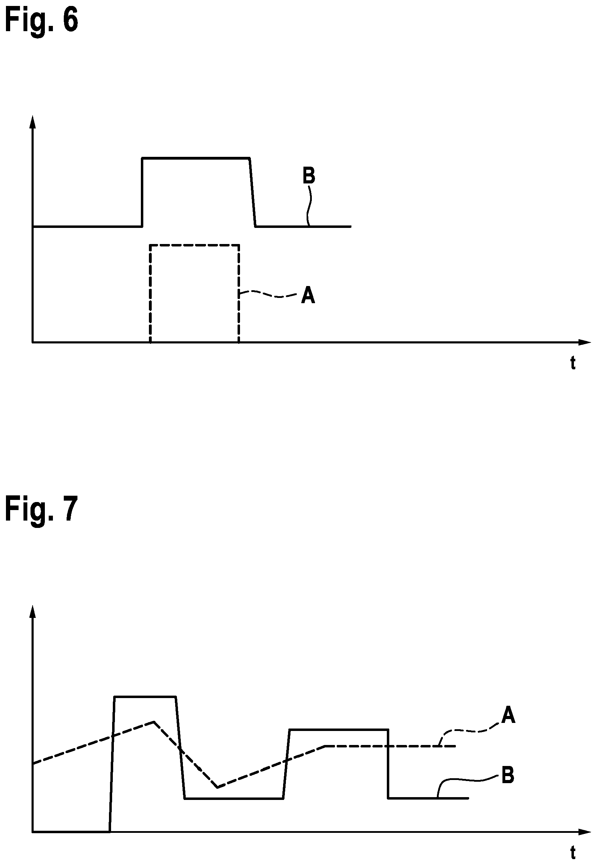

Der mechanische Kompressor 5 kann intermittierend betrieben werden, wie beispielhaft in dem Diagramm der Figur 6 dargestellt. Die Kurve A gibt die Drehzahl, die Kurve B den Druckverlauf über die Zeit t wieder. Durch Inbetriebnahme des mechanischen Kompressors 5 kann der Druck bei Bedarf von einem ersten Druckniveau auf ein zweites Druckniveau angehoben werden. Durch Abschalten des mechanischen Kompressors 5 kann das Druckniveau wieder auf das erste Druckniveau gesenkt werden.

Die Figur 7 zeigt beispielhaft einen dynamischen Betrieb des mechanischen Kompressors 5. Die Drehzahl der Welle (Kurve A) wird variiert, um den Druck (Kurve B) an den jeweiligen Bedarf anzupassen.

## Patentansprüche

1. Vorrichtung zur Komprimierung und Reinigung von Wasserstoff, aufweisend einen elektrochemischen Wasserstoffkompressor (1) mit einer Protonenaustauschmembran (2), die eine Anode (3) von einer Kathode (4) trennt, wobei der elektrochemische Wasserstoffkompressor (1) in einen mechanischen Kompressor (5) mit einer drehbar gelagerten Welle (6) integriert ist.

2. Vorrichtung nach Anspruch 1,
**dadurch gekennzeichnet, dass** die Welle (6) mindestens einen Nocken (7) aufweist, an der ein Kolben (8) einer Kolben-Zylinder-Einheit (9) radial abgestützt ist.

3. Vorrichtung nach Anspruch 1 oder 2,
**dadurch gekennzeichnet, dass** die Welle (6) zumindest abschnittsweise als Hohlwelle ausgebildet ist, über die der Anode (3) des elektrochemischen Wasserstoffkompressors (1) Wasserstoff und Wasser zuführbar ist.

4. Vorrichtung nach einem der vorhergehenden Ansprüche,
**dadurch gekennzeichnet, dass** die Welle (6) einen Abschnitt (10) mit mantelseitigen Öffnungen (11) aufweist, der von der Protonenaustauschmembran (2) des elektrochemischen Wasserstoffkompressors (1) umgeben ist.

5. Vorrichtung nach einem der vorhergehenden Ansprüche,
**dadurch gekennzeichnet, dass** die Protonenaustauschmembran (2) in einem volutenartigen Gehäuseteil (12) des mechanischen Kompressors (5) aufgenommen ist, durch das die Welle (6) hindurchgeführt ist.

6. Vorrichtung nach Anspruch 5,
**dadurch gekennzeichnet, dass** in dem volutenartigen Gehäuseteil (12) eine Kammer (13) ausgebildet ist, die von der Protonenaustauschmembran (2) durch eine Öffnungen (14) aufweisende Wand (15) und/oder eine kathodenseitige Gasdiffusionslage (19) getrennt ist, wobei vorzugsweise in der Kammer (13) ein Kühlelement, beispielsweise ein Peltier-Element (16), aufgenommen ist.

7. Vorrichtung nach Anspruch 5 oder 6,
**dadurch gekennzeichnet, dass** die in dem volutenartigen Gehäuseteil (12) ausgebildete Kammer (13) mit einer Druckkammer (17) der Kolben-Zylinder-Einheit (9) verbunden ist.

8. Vorrichtung nach einem der vorhergehenden Ansprüche,
**dadurch gekennzeichnet, dass** der mechanische Kompressor (5) eine weitere Kolben-Zylinder-Einheit (9) zur Komprimierung eines weiteren Gases, insbesondere von Methan, aufweist, das vorzugsweise bei der Erzeugung von hochkomprimiertem, reinen Wasserstoff als Nebenprodukt anfällt.

9. Verfahren zur Komprimierung und Reinigung von Wasserstoff unter Verwendung einer Vorrichtung nach einem der vorhergehenden Ansprüche, wobei mit Hilfe des elektrochemischen Wasserstoffkompressors (1) komprimierter und gereinigter Wasserstoff mit Hilfe des mechanischen Kompressors (5) nachverdichtet wird.

10. Verfahren nach Anspruch 9,
**dadurch gekennzeichnet, dass** der mechanische Kompressor (5) intermittierend und/oder mit variierender Drehzahl betrieben wird.

11. Verfahren nach Anspruch 9 oder 10,
**dadurch gekennzeichnet, dass** der Anode (3) des elektrochemischen Wasserstoffkompressors (1) zusammen mit Wasserstoff oder einem wasserstoffhaltigen Gasgemisch Wasser zum Befeuchten der Protonenaustauschmembran (2) zugeführt wird.

12. Verfahren nach einem der Ansprüche 9 bis 11,
**dadurch gekennzeichnet, dass** im Betrieb des mechanischen Kompressors (5) die Anode (3) gegenüber der Kathode (4) des elektrochemischen Wasserstoffkompressors (1) rotiert wird.

13. Verfahren nach einem der Ansprüche 9 bis 12,
**dadurch gekennzeichnet, dass** kathodenseitig der komprimierte Wasserstoff aktiv abgekühlt wird, beispielsweise mit Hilfe eines Peltier-Elements (16), so dass in die Kathode (4) gelangender Wasserdampf kondensiert und über einen bodenseitigen Auslass (20) abführbar ist.

14. Verfahren nach einem der Ansprüche 9 bis 13,
**dadurch gekennzeichnet, dass** vor dem Nachverdichten der Reinheitsgrad des komprimierten und gereinigten Wasserstoffs mit Hilfe eines Wasserstoffsensors (21) ermittelt wird.

15. Verfahren nach einem der Ansprüche 9 bis 14,
**dadurch gekennzeichnet, dass** mit Hilfe des mechanischen Kompressors (5) der komprimierte und gereinigte Wasserstoff einem Hochdruckspeicher (22) zugeführt wird.
